# EUROPÄISCHE PATENTSCHRIFT

(11) **EP 2 724 832 B1**
(45) Veröffentlichungstag und Bekanntmachung des Hinweises auf die Patenterteilung: **12.06.2019**
(21) Anmeldenummer: 13189751.4
(22) Anmeldetag: 22.10.2013
(51) Int. Cl.: B28B 11/04, B29C 44/18, B29C 44/44

(54) **VERFAHREN ZUR HERSTELLUNG EINES MAUERSTEINS MIT DÄMMFÜLLUNG**
METHOD FOR PRODUCING A BRICK WITH INSULATING FILLER
PROCÉDÉ DE FABRICATION D'UNE BRIQUE DOTÉE D'UN REMPLISSAGE ISOLANT

(30) Priorität: 24.10.2012 DE 102012110159
(43) Veröffentlichungstag der Anmeldung: 30.04.2014
(73) Patentinhaber: Kellerer, Michael, 82281 Oberweikertshofen (DE)
(72) Erfinder: Kellerer, Michael, 82281 Oberweikertshofen (DE)
(74) Vertreter: Kuhnen & Wacker Patent- und Rechtsanwaltsbüro PartG mbB

(56) Entgegenhaltungen:
- EP-A2- 2 489 487
- WO-A1-83/00029
- WO-A2-2010/066454
- CN-B- 101 032 828
- DE-A1- 3 006 008
- DE-A1- 3 144 370
- DE-A1- 3 200 197
- DE-A1-102006 054 457
- FR-A1- 2 292 081
- FR-A1- 2 555 637
- US-A1- 2008 224 357

## Beschreibung

Die vorliegende Erfindung betrifft ein Verfahren zur Herstellung eines Mauersteins mit einer Dämmfüllung nach dem Oberbegriff des Anspruches 1.

Mit den ständig steigenden Anforderungen an einen Mauerstein insbesondere mit Blick auf die verbesserte Wärmedämmung rücken zunehmend Wärmedämmverfüllsteine in den Fokus der Entwicklungstätigkeiten. Derartige Verfüllsteine erreichen in der Regel dann besonders gute Wärmedämmeigenschaften, wenn sie eine Füllung aus geschäumten Kunststoffen aufweisen. Dabei unterliegen derartige Mauersteine jedoch auch Anforderungen hinsichtlich Brandschutz, Schallschutz, usw.. Allerdings sind diese unterschiedlichen Anforderungen meistens gegenläufig zueinander, d.h. eine Verbesserung in einer Hinsicht führt in der Regel zu einer Verschlechterung der anderen Eigenschaften.

Aus der DE 198 07 040 C5 ist z.B. ein Wärmedämmverfüllziegel mit einer Mehrzahl von Hochlöchern bzw. Verfüllkanälen bekannt geworden, in denen ein Ziegelleichtschaum, beispielsweise nach der DE 197 08 779 A1, angeordnet ist, um verbesserte Wärmedämmeigenschaften herzustellen. Die Verfüllung der Wärmedämmverfüllziegel kann hierbei entweder am Ort der Herstellung oder direkt auf der Baustelle vorgenommen werden. Die Wärmedämmeigenschaften dieses Ziegels sind jedoch weniger gut als jene mit einer Füllung aus geschäumtem Kunststoff.

Die DE 102 29 856 A1 offenbart einen Hochlochwärmedämmstein, bei dem die Hochlöcher zum Teil mit wärmedämmenden Stoffen ausgefüllt sind. Den gegenläufigen Anforderungen, einerseits die für tragende Innenwände und Außenwände verwendeten Mauersteine brandsicher zu gestalten und andererseits eine hohe Wärmedämmfähigkeit herzustellen, wird mit unterschiedlichen Dämmmaterialen Rechnung getragen. Die Füllstoffe sind auf der Innenseite der Wand aus einem nichtbrennbaren, wärmedämmenden Material, wie z.B. Perlit oder granulierte Mineralfasern, und auf der Außenseite der Wand aus einem hochwärmedämmenden, jedoch brennbarem oder nicht hitzebeständigen Dämmstoff, wie z.B. Polystyrol- bzw. Polyurethan-Schaumplatten oder Phenolharzplatten. Ein derartiger Mauerstein ist jedoch nur unter extrem hohen Aufwand herstellbar.

Ferner ist aus der WO 83/00029 A1 eine Vorrichtung und ein Verfahren zur Herstellung eines Dämmsteins bekannt geworden, bei dem mehrere Hohlräume mit expandierbaren thermoplastischen Polymeren ausgeschäumt werden. Für das mittels Dampf durchgeführte Ausschäumen des Dämmsteins ist es hier jedoch erforderlich, eine externe entgegendrückende Kraft auf die Seitenflächen aufzubringen. Hierzu werden Platten als Bestandteil eines Druckbeaufschlagungssystems direkt auf die äußere Oberfläche der Seitenwände angelegt, um diese beim Ausschäumen zu stabilisieren. Bei einem Ausschäumen ohne ein derartiges Druckbeaufschlagungssystem könnte es aufgrund der Ausdehnung des Dämmstoffs dagegen zu Rissen und Brüchen in dem Dämmstein kommen, so dass bei einer solchen Herstellungsweise in hohem Maße Ausschuss anfallen würde.

Aus der CN 101 032 828 B ist ein Verfahren nach dem Oberbegriff des Anspruchs 1 bekannt. In einen Mauersteinrohling werden expandierbare Polystyrol-Partikel eingefüllt und mittels Dampf aufgeschäumt.

Bei den herkömmlichen Mauersteinen mit einer Dämmfüllung nach dem Stand der Technik ist es ferner ein Problem, dass der Mauerstein bei hohen Temperaturen, wie sie z.B. im Brandfall auftreten, häufig zerbricht und damit die statische Tragkraft eines hiermit hergestellten Mauerwerks verloren geht. Damit besteht dann eine erhebliche Einsturzgefahr für das entsprechende Bauwerk, was z.B. im Brandfall Rettungsarbeiten erheblich erschwert und Personen gefährdet.

Der Erfindung liegt daher die Aufgabe zugrunde, ein Verfahren zur Herstellung eines Mauersteins mit einer Dämmfüllung zu schaffen, durch das dieser so konditioniert ist, dass er selbst unter dem Einfluss von hohen Temperaturen, wie bei einem Brand, weniger bruchgefährdet ist, und alle in dem Mauerstein eingebrachten Polystyrol-Partikel ausreichend geschäumt werden.

Diese Aufgabe wird verfahrenstechnisch durch die Merkmale des Anspruchs 1 gelöst.

Erfindungsgemäß wird somit ein Verfahren vorgeschlagen, das die folgenden Schritte aufweist: Zunächst wird ein Mauersteinrohling bereitgestellt, der noch keine Dämmfüllung aufweist. Anschließend werden expandierbare Polystyrol-Partikel in wenigstens einige der Hochlöcher des Mauersteinrohlings eingebracht. Im nächsten Schritt werden die Polystyrol-Partikel mittels Dampfexpandiert, so dass diese sich ausdehnen und sich in dem jeweiligen Hochloch zur Herstellung eines Dämmkörpers miteinander verbinden. Ferner werden die Polystyrol-Partikel erfindungsgemäß bis zu dem Grad expandiert, an dem die Dämmkörper eine Dichte im Bereich zwischen 10 kg/m³ und 30 kg/m³ aufweisen.

Erfindungsgemäß wurde erkannt, dass das Zerbrechen von Mauersteinen unter Hitzeeinfluss durch eine Ausdehnung des Dämmstoffs verursacht wird, der in den Hochlöchern angeordnet ist. Dieser ist in der Regel durch ein Treibgas aufgeschäumt, wobei sich dieses im Zuge der Steinfertigung nicht vollständig verflüchtigt, sondern auf Dauer aktivierbar in den Polystyrol-Partikeln des Dämmstoffs vorliegt. Unter der Einwirkung von hohen Temperaturen sorgt das Treibgas dann für eine weitere Ausdehnung der Polystyrol-Partikel und somit für eine erhebliche Belastung der Wände der Hochlöcher. Hierfür sind diese jedoch weder vorgesehen noch dimensioniert, so dass es hier auch im bereits verbauten Zustand zu Materialbrüchen kommen kann.

Der Expansionsschritt wird bis zu dem Grad ausgeführt, an dem weniger als 20 Vol.-% an Resttreibgas in den expandierbaren Polystyrol-Partikeln vorhanden ist. Das Resttreibgas bestimmt das Restexpansionsvermögen bzw. -volumen. Es handelt sich dabei um das Vermögen bzw. Volumen, das noch den einzelnen Polystyrol-Partikeln gegeben ist, so dass diese um den entsprechenden Vol.-% -Anteil expandiert werden könnten. Das in den Polystyrol-Partikeln enthaltene Treibgas ermöglicht, dass sich die einzelnen Polystyrol-Partikel von einem Ausgangszustand, bei dem die Partikel granulatartig vorliegen, zu einem Endzustand, bei dem die Partikel einen größeren Durchmesser und eine geringere Dichte als im Ausgangszustand aufweisen, expandieren. Durch den geringen Anteil von weniger als 20 Vol.-% an Resttreibgas in den expandierbaren Polystyrol-Partikeln können die Polystyrol-Partikel nicht mehr unter Einwirkung von hohen Temperaturen, wie etwa im Brandfall, derart nachschäumen, dass der Mauerstein birst. Dabei ist jedoch beim Ausschäumen der Polystyrol-Partikel zu anzustreben, dass nicht das ganze Treibgas aus den Polystyrol-Partikeln entweicht oder verschäumt wird, da sonst die einzelnen Partikel implodieren können.

Durch das erfindungsgemäß speziell spezifizierte Aufschäumen der Polystyrol-Partikel wird dagegen überraschend erreicht, dass sich die Polystyrol-Partikel unter Einfluss von hohen Temperaturen, wie etwa im Brandfall, nicht mehr weiter oder lediglich geringfügig ausdehnen. In praktischen Versuchen hat sich hierbei gezeigt, dass in erfindungsgemäßer Weise expandierte Polystyrol-Partikel ihre Möglichkeit für eine nennenswerte weitere Expansion verloren haben. Ein sogenanntes ungewolltes "Nachschäumen" der Polystyrol-Partikel kann mithin besonders gut vermieden werden. So kann auf vorteilhafte Weise erreicht werden, dass der Mauerstein bei hohen Temperaturen nicht birst.

Die Hochlöcher werden dabei abwechselnd von beiden Seiten mit Dampf beaufschlagt. So wird auf vorteilhafte Weise erreicht, dass alle in dem Mauerstein eingebrachten Polystyrol-Partikel noch zuverlässiger mit hinreichend Energie beaufschlagt und ausreichend geschäumt werden. Insbesondere wird damit eine unvollständige Durchströmung der Hochlöcher zuverlässig vermieden, was andernfalls zu dem Nachteil führen könnte, dass sich die Polystyrol-Partikel an einem Endbereich eines Hochlochs bereits verfestigen, bevor die Polystyrol-Partikel am anderen Ende des Hochlochs vom Dampf erreicht werden. Das Problem einer möglicherweise zu geringen Eindringtiefe des Dampfes in die Hochlöcher wird mit dem abwechselnden Beaufschlagen des Dampfes von beiden Seiten vorteilhaft gelöst.

Ferner hat sich gezeigt, dass ein derart hergestellter Mauerstein verglichen mit einem herkömmlich gefertigten Mauerstein eine bessere Wärmedämmung aufweisen kann. So kann der Anteil bzw. das Volumen an Mauersteinmaterial im Vergleich zum Anteil bzw. Volumen der Dämmfüllung reduziert werden, da die Stege des Mauersteins eine geringere Zugbelastung erfahren, weil die Polystyrol-Partikel nicht mehr oder nur noch gering nachschäumen. Somit können die Stege geringer dimensioniert werden, was den Einbau von mehr Volumen an Dämmfüllung ermöglicht. Auch das Lochbild des Mauersteins kann je nach Bedarf somit besonders frei gestaltet werden.

Die Verwendung von Polystyrol-Partikel als Dämmfüllung stellt sich vorteilhaft dar, da diese eine geringe Wärmeleitfähigkeit aufweisen. Ferner kann hier auf vorteilhafte Weise zum Ausschäumen z.B. Wasserdampf verwendet werden, wodurch der verfahrenstechnische und apparative Aufwand besonders gering gehalten werden kann.

Ein weiterer Vorteil bei der Verwendung von Polystyrol-Partikel ist deren wasserabweisende Eigenschaft. So nehmen die Polystyrol-Partikel lediglich eine Absorptionsfeuchte von weniger als 5 % auf, wodurch Schimmelbildung und Verrotten der Dämmfüllung wirksam verhindert wird, was mit einem Verlust der Wärmedämmwirkung verbunden wäre.

Der erfindungsgemäß ausgestaltete Dämmkörper nimmt ferner die durch Schall verursachten Schwingungen der Stege auf und wirkt so gegenüber den Außen- und Innenstegen dämpfend, so dass ein mit einem solchen Verfahren hergestellter Mauerstein erhöhte Schallschutzeigenschaften aufweist.

Somit wird erstmals ein Mauerstein mit Dämmfüllung geschaffen, der neben einer geringen Wärmeleitfähigkeit auch den Brandschutzanforderungen Rechnung trägt.

Vorteilhafte weitere Ausgestaltungen des erfindungsgemäßen Verfahrens sind Gegenstand der abhängigen Ansprüche 2 bis 9.

So ist es möglich, dass der Schritt des Einbringens von expandierbaren Polystyrol-Partikeln in wenigstens einige der Hochlöcher des Mauersteinrohlings mittels Schieben, Rütteln und/oder Saugen durchgeführt wird. Durch die Verwendung der Saugapparatur können die expandierbaren Polystyrol-Partikel in die Hochlöcher gesaugt werden, so dass sich der Füllgrad der expandierbaren Polystyrol-Partikel in den Hochlöchern des Mauersteins vorteilhaft erhöhen lässt. Eine weitere Herangehensweise, um eine möglichst vollständige Verfüllung der Hochlöcher zu erreichen, ist die Verwendung einer Rüttelapparatur, mit der der Mauerstein während des Befüllens mit expandierbaren Polystyrol-Partikel gerüttelt wird; damit werden die einzelnen expandierbaren Polystyrol-Partikel in den Hochlöchern derart angeordnet, dass im Wesentlichen jeder Freiraum von expandierbarem Polystyrol-Partikel eingenommen bzw. damit ausgefüllt wird. Mittels der Schiebetechnik, welche ggf. wiederholt im Zuge des Einbringvorgangs oder auch abschließend eingesetzt werden kann, streift eine Schiebeapparatur die vorliegenden expandierbaren Polystyrol-Partikel an einer Befüllungseinrichtung ab, so dass diese leichter in die Hochlöcher hineinfallen. Dabei kann das Einbringen der expandierbaren Polystyrol-Partikel auch mehrmals hintereinander durchgeführt werden, so dass der Füllgrad erhöht wird. Um einen möglichst hohen Füllgrad der expandierbaren Polystyrol-Partikel in den einzelnen Hochlöchern der Mauersteine zu erreichen, hat es sich als besonders vorteilhaft erwiesen, diese drei Techniken beim Einbringen der expandierbaren Polystyrol-Partikel zu kombinieren. Sie können jedoch auch einzeln angewendet werden.

Ferner ist es vorteilhaft möglich, dass die Polystyrol-Partikel bis zu dem Grad expandiert werden, an dem die Dämmkörper eine Dichte im Bereich zwischen 15 kg/m³ und 30 kg/m³ aufweisen. Speziell in diesem Bereich hat sich gezeigt, dass die erfindungsgemäßen Effekte noch zuverlässiger erreicht werden. Vorzugsweise kann der Dämmkörper eine Dichte im Bereich zwischen 17 kg/m³ und 23 kg/m³, und insbesondere eine Dichte im Bereich von etwa 20 kg/m³ aufweisen, was sich in praktischen Versuchen als besonders vorteilhaft erwiesen hat.

Vorzugsweise kann der Expansionsschritt bis zu dem Grad ausgeführt werden, an dem weniger als 10 Vol.-%, und insbesondere weniger als 5 Vol.-%, an Resttreibgas in den expandierbaren Polystyrol-Partikeln vorhanden ist. Auch hier haben praktische Versuche zu besonders guten Ergebnissen geführt.

Ferner Polystyrolkönnen die Polystyrol-Partikel zwischen 20 und 70 Sekunden, und insbesondere zwischen 40 und 50 Sekunden, mit Dampf beaufschlagt werden, was entsprechend der durchgeführten Versuche zu besonders guten Ergebnissen führt.

Darüber hinaus kann der Dampf mit einem Druck im Bereich zwischen 0,1 bar und 3,5 bar eingebracht werden. Hierbei zeigte sich, dass in diesem Druckbereich die Polystyrol-Partikel besonders vorteilhaft expandiert werden können. Zudem ist hierdurch eine zuverlässige Durchströmung der Polystyrol-Partikel durch den Dampf erzielbar. Dabei wird die zwischen den Polystyrol-Partikeln vorliegende Luft zuverlässig durch den Dampf verdrängt, so dass deren Expansion besonders vorteilhaft und gleichmäßig über den gesamten Bearbeitungsbereich gelingt. Vorzugsweise kann der Dampf mit einem Druck im Bereich zwischen 1,0 bar und 1,7 bar, und insbesondere zwischen 1,4 bar und 1,6 bar, eingebracht werden, was sich als noch vorteilhafter erwiesen hat.

Wenn die Polystyrol-Partikel dabei in den Hochlöchern des Mauersteinrohlings eingeschlossen werden, wird vermieden, dass diese bei der Beaufschlagung mit Dampf, Heißluft in Bewegung geraten. Dadurch erhöht sich die Prozesssicherheit und die so erzeugten Dämmkörper weisen besonders vorteilhafte Eigenschaften auf.

Ferner kann der Mauerstein vor dem Expansionsschritt derart umschlossen werden, dass der nachfolgend durch den Dampf aufgebrachte Druck auch auf die Außenseiten des Mauersteins einwirkt. Dadurch kann bereits bei der Herstellung des Mauersteins besonders gut vermieden werden, dass der Mauerstein im Zuge des Ausschäumens bricht, indem der auf das Lochbild durch den Dampf aufgebrachte Druck durch einen Gegendruck auf die Außenseiten ausgeglichen wird.

Neben gewöhnlichen Polystyrol-Partikeln können auch expandierbare Polystyrol-Partikel mit athermanen Stoffen, wie z.B. Metalloxiden, Graphit, Aluminiumpulver, Ruß, Metallpulver, usw., verwendet werden. Durch den Einsatz von vorexpandiertem Polystyrol lässt sich zudem der Verfahrensgang vereinfachen und der Ausschäumschritt beschleunigen.

Darüber hinaus kann das Verfahren zur Herstellung eines Mauersteins mit einer Dämmfüllung den Schritt des Abschmelzens überschäumter Polystyrol-Partikel aufweisen, so dass die Dämmfüllung mit einer Höhe des Mauersteinrohlings fluchtet. So kann auf vorteilhafte Weise erreicht werden, dass keine Polystyrol-Partikel über die Höhe des Mauersteins überstehen und folglich die Mauersteine sachgemäß verarbeitet werden können. Gerade bei den weit verbreiteten Planziegeln, welche beim Verarbeiten verklebt werden, spielt deren Maßgenauigkeit eine wesentliche Rolle. Das Abschmelzen kann mit einer Schmelzeinrichtung erfolgen, mit der entweder die Polystyrol-Partikel eines einzelnen Mauersteins oder von einer Reihe von hintereinander angeordneten Mauersteinen in einem Zuge abgeschmolzen werden können. Dadurch wird ferner erreicht, dass der Mauerstein an der Lagerfuge frei von Polystyrol-Partikeln ist. Somit können die Mauersteine sicher Stein auf Stein verklebt werden, wodurch sich eine besonders gute Standsicherheit für das so hergestellte Mauerwerk ergibt.

Die Erfindung wird nachfolgend in Ausführungsbeispielen anhand der Figuren der Zeichnung näher erläutert. Es zeigt:
- Fig. 1: eine schematische perspektivische Ansicht eines Mauersteins mit Dämmfüllung,
- Fig. 2: eine schematische perspektivische Ansicht eines Mauersteinrohlings ohne Dämmfüllung,
- Fig. 3: eine schematische perspektivische Ansicht eines Mauersteinrohlings während der Befüllung der Hochlöcher mit vorexpandierten Polystyrol,
- Fig. 4: eine schematische perspektivische Ansicht einer exemplarischen Vorrichtung zum Beaufschlagung von Wasserdampf auf den Mauerstein,
- Fig. 5: eine schematische perspektivische Ansicht einer exemplarischen Bereitstellungsauflage einer Expansionseinrichtung,
- Fig. 6: eine schematische Schnittansicht eines Lochbilds des aus Fig. 1 dargestellten Mauersteins,
- Fig. 7: eine schematische Vorderansicht einer Befüllungseinrichtung,
- Fig. 8: eine schematische Seitenansicht einer Expansionseinrichtung,
- Fig. 9: ein schematisches Kreislaufsystem der Expansionseinrichtung,
- Fig. 10: eine schematische Seitenansicht einer Schmelzeinrichtung, und
- Fig. 11: eine schematische Schnittansicht eines Lochbilds eines Mauerstein mit rechteckigen Hochlöchern.

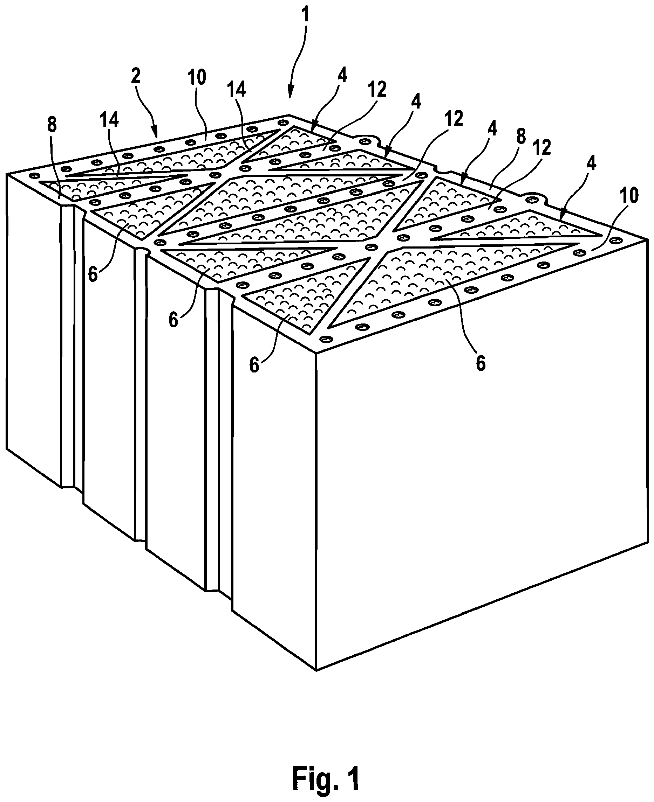

Figur 1 zeigt eine perspektivische Ansicht eines als Hochlochziegel ausgestalteten Mauersteins 1 mit einer in Hochlöchern 4 eines Mauersteinrohlings 2 eingebrachten Dämmfüllung 6, welche einen Dämmkörper bildet und aus expandiertem Polystyrol ist. Der Mauerstein 1 weist zwei gegenüberliegende Außenstege 10, zwei quer zu den Außenstegen 10 und einander gegenüberliegende Stoßfugenstege 8, drei im Wesentlichen parallel zu und zwischen den Außenstegen 10 liegende Innenstege 12 und mehrere Verstrebungsstege 14 auf.

Nachfolgend wird nun eine erste Verfahrensweise zur Herstellung des Mauersteins 1 erläutert.

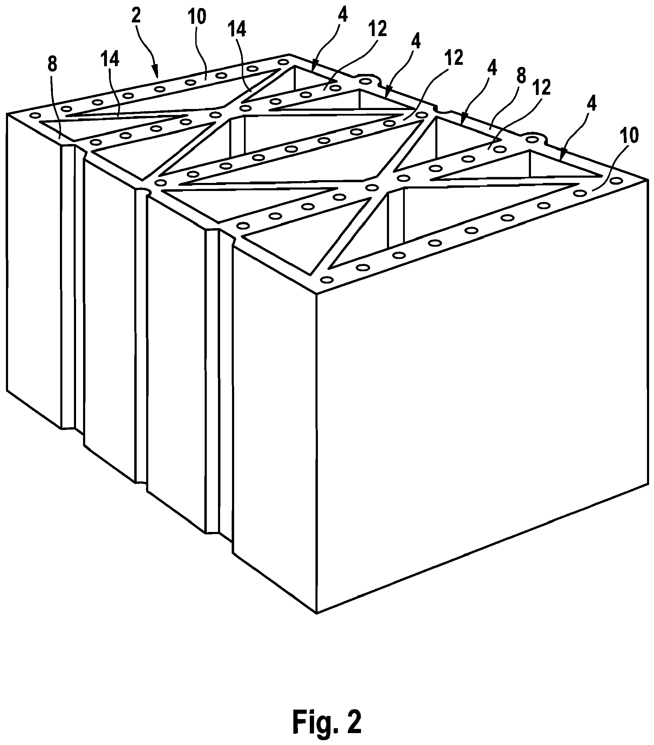

Figur 2 zeigt den Mauersteinrohling 2 mit mehreren noch nicht mit einer Dämmfüllung 6 gefüllten dreieckigen Hochlöchern 4. Der Mauersteinrohling 2 ist ein bereits getrockneter, gebrannter und plangeschliffener Ziegel.

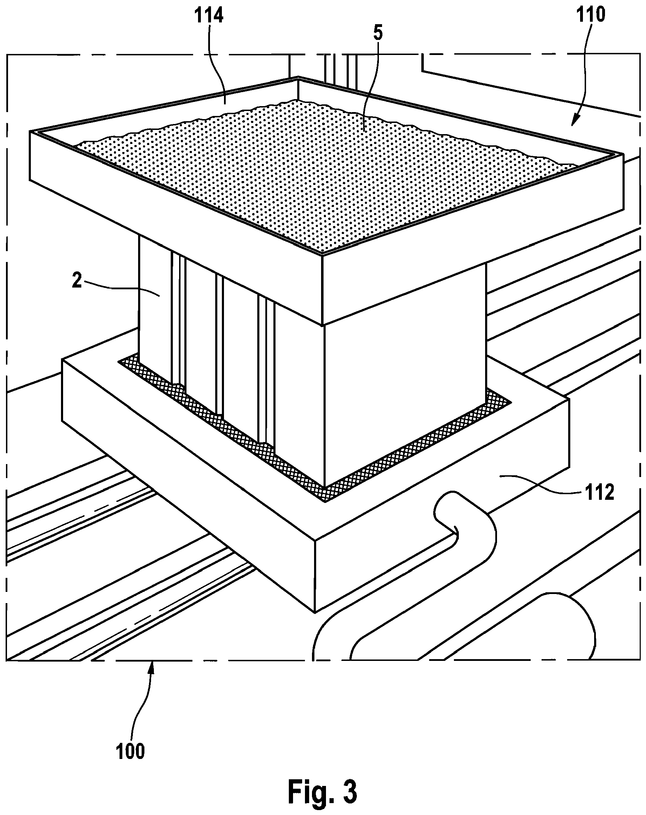

Die Fig. 3 bis 5 zeigen Details einer Vorrichtung 100 gemäß einer ersten Ausführungsform, welche zur Herstellung eines Mauerziegels 1 dient. Die Vorrichtung 100 weist eine Befüllungseinrichtung 110 und eine Expansionseinrichtung 120 auf.

Figur 3 zeigt eine perspektivische Ansicht eines Mauersteinrohlings 2 während der Befüllung der Hochlöcher 4 mit vorexpandierten Polystyrol 5. Der Mauersteinrohling 2 ist dabei auf eine Bereitstellungsauflage 112 der Befüllungseinrichtung 110 der Vorrichtung 100 gestellt. Die Hochlöcher 4 des Mauersteinrohlings 2 werden unter Zuhilfenahme einer als Zuführeinheit 114 dienenden Befüllwanne befüllt, welche als Polymer-Partikel das granulatartige, vorexpandierte Polystyrol 5 enthält und dieses unter Schwerkrafteinwirkung zuführt. Den Polymer-Partikeln ist dabei kein Bindemittel beigefügt.

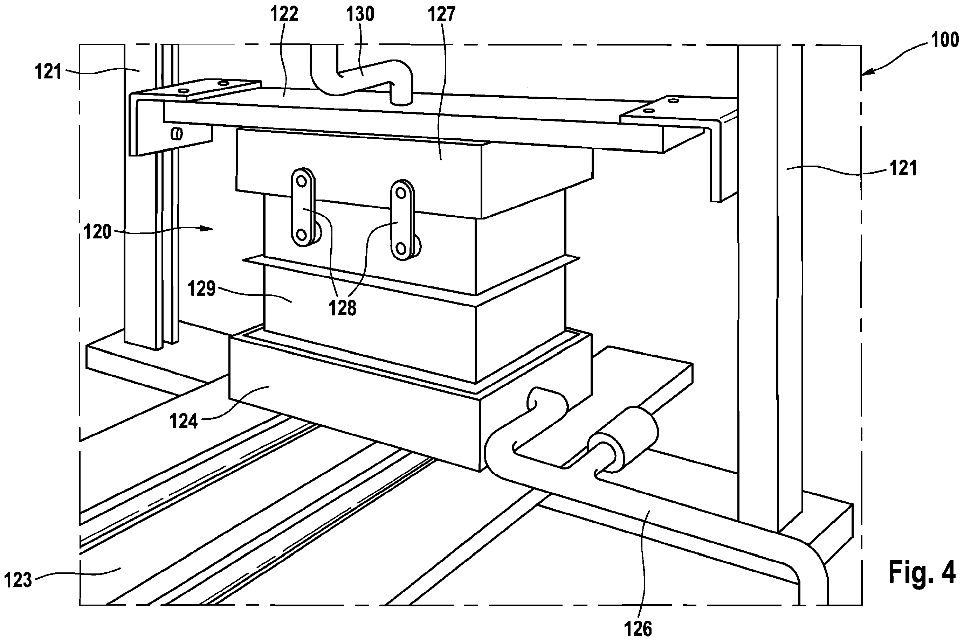

Figur 4 stellt eine perspektivische Ansicht der Expansionseinrichtung 120 der Vorrichtung 100 dar, welche zum Beaufschlagen von Wasserdampf auf das in den Mauersteinrohling 2 eingefügte Polystyrol 5 dient. Diese weist zwei vertikale Stützen 121 auf, die zwischen sich eine vertikal bewegbare Trägerstruktur 122 aufnehmen. Die Trägerstruktur 122 kann unter Einsatz von pneumatischen oder hydraulischen Komponenten o. dgl., die nicht dargestellt sind, bewegt werden. Eine Bereitstellungsauflage 124 mit dem darauf platzierten Mauersteinrohling 2 ist im Bereich eines Sockels 123 angeordnet und weist dampfdurchlässige Öffnungen auf.

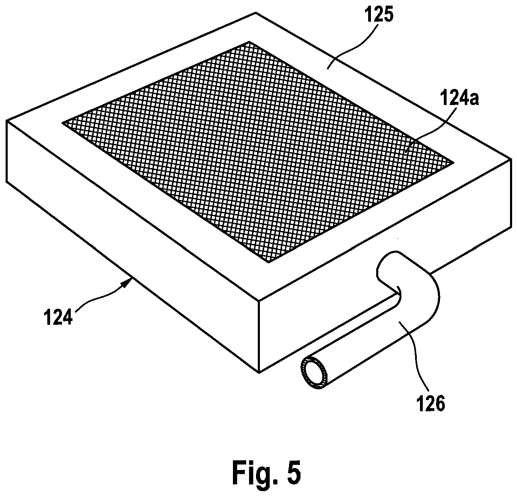

Hierzu ist in Figur 5 eine schematische perspektivische Ansicht einer Bereitstellungsauflage 124 dargestellt. Diese bildet einen quaderförmigen Raum 125 aus, in den über eine untere Dampfzuführleitung 126 Wasserdampf zugeführt wird. Der Wasserdampf wird ferner mittels einer schematisch angezeigten gitterartigen Auflageoberfläche 124a an den Mauersteinrohling 2 weitergegeben. Eine der Bereitstellungsauflage 124 gegenüberliegende Abdeckung 127 (vgl. Fig. 4) ist auf analoger Weise konfiguriert. Diese Abdeckung 127 ist an der Trägerstruktur 122 angeordnet. Durch die analoge Ausgestaltung der Bereitstellungsauflage 124 mit der Abdeckung 127 kann der mit dem Polystyrol 5 befüllte Mauersteinrohling 2 von beiden Seiten eingespannt bzw. umgriffen und mit Wasserdampf beaufschlagt bzw. durchströmt werden. Dabei wird der Wasserdampf jeweils von einer Seite in die Hochlöcher eingebracht und an der gegenüberliegenden Seite mit Unterdruck hieraus abgezogen. An der Bereitstellungsauflage 124 und der Abdeckung 127 kann somit jeweils sowohl Wasserdampf unter Druck als auch ein Unterdruck angelegt werden.

Die nach dem Einfüllen zwischen den Polymer-Partikeln vorliegende Luft wird dabei in Wesentlichen aus deren Zwischenräumen verdrängt. Dies wird noch durch die Expansion des Polystyrols 5 oder durch Ansetzen von Vakuum unterstützt. Schließlich verbinden sich die einzelnen Polymer-Partikel miteinander in der Art, dass sie quasi miteinander "verbacken" und so einen Formkörper im jeweiligen Hochloch 4 bilden. Hierzu ist kein Einsatz von Bindemittel erforderlich.

Zur Verbesserung des Aufschäumens der Polymer-Partikel ist an der Abdeckung 127 mittels mehrerer Verbindungselemente 128 eine Seitenwandstruktur 129 angeordnet (vgl. Fig. 4). Dadurch kann der Mauersteinrohling 2 komplett umschlossen werden, so dass während des Expansionsschritts der nachfolgend aufgebrachte Dampfdruck auch auf die Außenseiten des Mauersteinrohlings 2 wirkt. So wirkt dieser gegenüber dem in die Hochlöcher 4 eingebrachten Druck ausgleichend, so dass die Stege während des Expansionsschritts keiner Zugspannung ausgesetzt werden und nicht brechen. Unter Außenseiten des Mauersteinrohlings 2 sind dabei die äußeren Flächen der Außenstege 10 sowie Stoßfugenstege 8 zu verstehen. Der aufgebrachte Dampf wird über eine Abfuhrleitung 130 abgezogen.

Der Wasserdampf wird nun abwechselnd von beiden Seiten auf die Hochlöcher 4 des Mauersteinrohlings 2 beaufschlagt. Hierbei zeigte sich in Versuchen, dass der Dampfdruck in etwa bei 1,5 bar und die Zeitspanne für das Beaufschlagen des Wasserdampfs auf den Mauersteinrohling 2 in etwa bei 45 Sekunden besonders vorteilhaft sind. Es ergibt sich dann ein Dämmkörper, der in seinem Endzustand eine Dichte von etwa 20 kg/m³ und eine Resttreibgasmenge der Polymer-Partikel von weniger als 5 Vol.-%, aber von mehr als 1 Vol.-% aufweist.

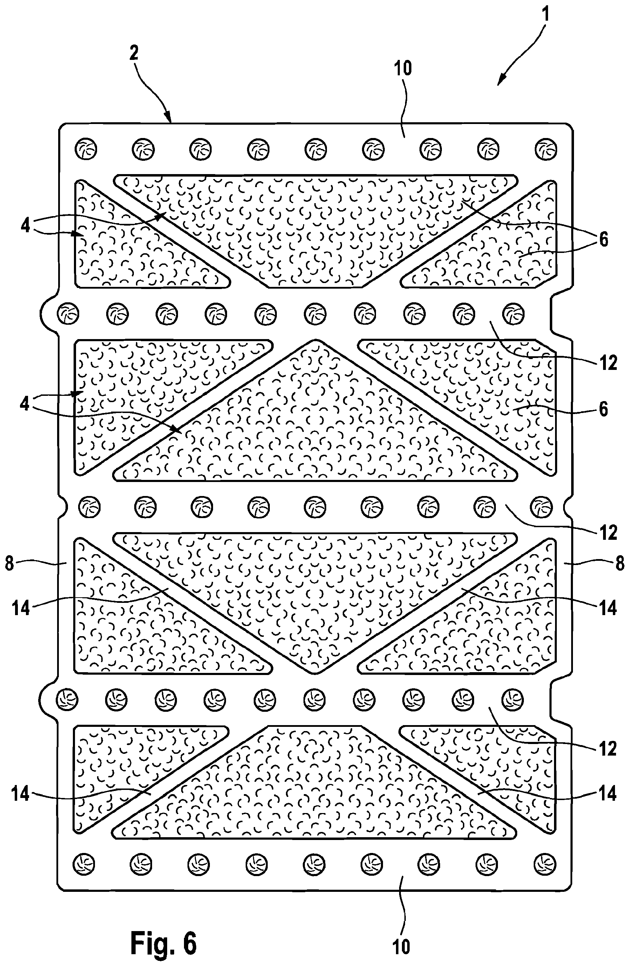

Nach dem Aufschäumen sowie dem Verfestigen der Dämmfüllung 6 im Mauersteinrohling 2 wird die Abdeckung 127 sowie die Seitenwandstruktur 129 mit Hilfe der sich nach oben bewegenden Trägerstruktur 122 von dem Mauersteinrohling 2 entfernt. Der Mauerstein 1 liegt dann in der Gestalt gemäß Figur 1 bzw. Figur 6 vor.

Ein Brandversuch mit diesem Mauerstein 1 hat gezeigt, dass dieser problemlos mindestens Feuerwiderstandsklasse F30-AB, bis zu Feuerwiderstandsklasse F90-AB oder mehr, nach DIN 4102 standhalten kann, je nach Lochbild und Festigkeit des Mauersteins 1.

Auch schalltechnisch erreicht der Mauerstein 1 besonders gute Werte. So ist ein korrigiertes, bewertetes Schalldämm-Maß R_{w,Bau,ref} von etwa 53 dB ohne weiteres erzielbar. Die allgemeinen Bemessungswerte nach DIN werden dabei weit übertroffen.

Nachfolgend wird nun eine zweite Ausführungsform der Erfindung mit einer weiteren Verfahrensweise zur Herstellung des Mauersteins 1 erläutert.

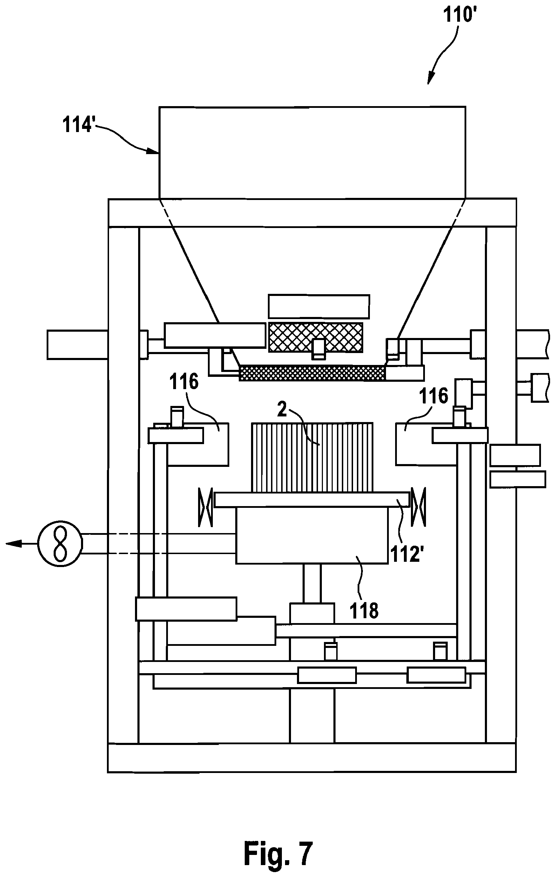

Gemäß der Darstellung in den Fig. 7 bis 10 weist eine Vorrichtung zur Herstellung des Mauersteins 1 hier eine Befüllungseinrichtung 110', eine Expansionseinrichtung 120' und eine Schmelzeinrichtung 140 auf.

Fig. 7 zeigt eine Vorderansicht der Befüllungseinrichtung 110', in welcher eine Mehrzahl von Mauersteinrohlingen 2 in Reihe hintereinander angeordnet ist. Jeder Mauersteinrohling 2 ist, wie in Fig. 2, ein bereits getrockneter, gebrannter und plangeschliffener Ziegel und steht auf einer gemeinsamen Bereitstellungsauflage 112'.

Die Befüllungseinrichtung 110' weist ferner eine trichterförmige Zufuhreinheit 114' auf, mit der die Polymer-Partikel in die Mauersteinrohlinge 2 eingebracht werden. Am unteren Ende der trichterförmigen Zufuhreinheit 114' ist ein Gitterrost o. dgl. mit einer in dessen Längsrichtung wirkenden Schiebeeinrichtung angebracht. Dieser Gitterrost etc. liegt ca. 2 mm über dem Mauersteinrohling 2 vor und durch die Bewegung der Schiebeeinrichtung werden Anhäufungen, Klumpen etc. der Polymer-Partikel aufgelöst.

Zwei gegenüberliegende Einspannelemente 116 spannen die hintereinander angeordneten Mauersteinrohlinge 2 ein und können beim Einbringen der Polymer-Partikel auch als Rüttelapparatur dienen.

An der gegenüberliegenden Seite der trichterförmigen Zufuhreinheit 114' ist eine vertikal bewegbare untere Abdeckung 118 vorgesehen, welche als Saugapparatur dient.

Im Wesentlichen quer zur Befüllungsrichtung ist an einer Seite an einer Trägerstruktur der Befüllungseinrichtung 110' eine hier nicht gezeigte, horizontal bewegbare Schiebeapparatur vorgesehen, die nach Befüllen der Polymer-Partikel in die Hochlöcher die überschüssigen Polymer-Partikel auf der Oberseite der Mauersteinrohlinge 2 entfernt bzw. abstreicht. Ebenfalls seitlich gegenüberliegend sind zwei gleichermaßen nicht dargestellte, bewegbare Absaugelemente vorgesehen, mit denen die Polymer-Partikel, welche auf der Bereitstellungsauflage 112' liegen, abgesaugt und anschließend wieder in einen die Polymer-Partikel enthaltenden Vorratsspeicher zurück transportiert werden.

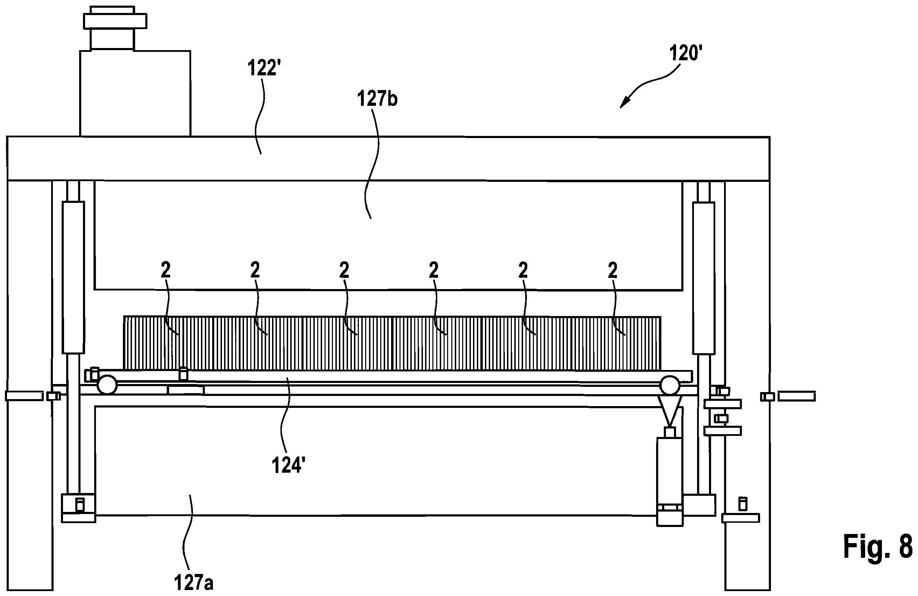

Fig. 8 stellt eine Seitenansicht der Expansionseinrichtung 120' dar, bei der sechs Mauersteinrohlinge 2 hintereinander in einer Reihe auf einer Bereitstellungsauflage 124' der Expansionseinrichtung 120' angeordnet sind. Die Bereitstellungsauflage 124' ist derart ausgebildet, dass sie die Mauersteinrohlinge 2 nur an Außenstegen trägt, um beim Expandieren mit Dampf das Eindringen in die Hochlöcher zu ermöglichen. Diese Reihe von Mauersteinrohlingen 2 wird, nachdem sie in der Befüllungseinrichtung 110' befüllt wurden, seitlich in die Expansionseinrichtung 120' transportiert. Einer unteren Abdeckung 127a vertikal gegenüberliegend ist eine obere Abdeckung 127b vorgesehen. Über beide Abdeckungen wird während des Expandierens Dampf in die einzelnen Mauersteinrohlinge 2 eingebracht. Sowohl die untere Abdeckung 127a als auch die obere Abdeckung 127b sind an einer Trägerstruktur 122' bewegbar befestigt, um sich an die Reihe von Mauersteinrohlingen 2 von oben und unten zu nähern. Nachdem die untere Abdeckung 127a und obere Abdeckung 127b unten bzw. oben an den Mauersteinrohlinge 2 positioniert sind, beginnt das Beaufschlagen und Durchströmen der Mauersteinrohlinge 2 mit Dampf. Sowohl in der unteren Abdeckung 127a als auch in der oberen Abdeckung 127b liegt dabei ein dampfdurchlässiges Element wie ein Lochblech, ein Gitterrost etc. an den Lagerfugenflächen des Mauersteinrohlings 2 an, so dass die Polymer-Partikel in den Hochlöchern des Mauersteinrohlings 2 eingeschlossen bzw. eingespannt sind. Das jeweilige dampfdurchlässige Element kann dabei mittels Federn gegen den Mauersteinrohling 2 gedrückt sein, um über die so gegebene Federkraft einen zuverlässigen Abschluss herzustellen. Die Polymer-Partikel bewegen sich daher trotz des aufgebrachten Dampfdrucks nicht oder allenfalls kaum.

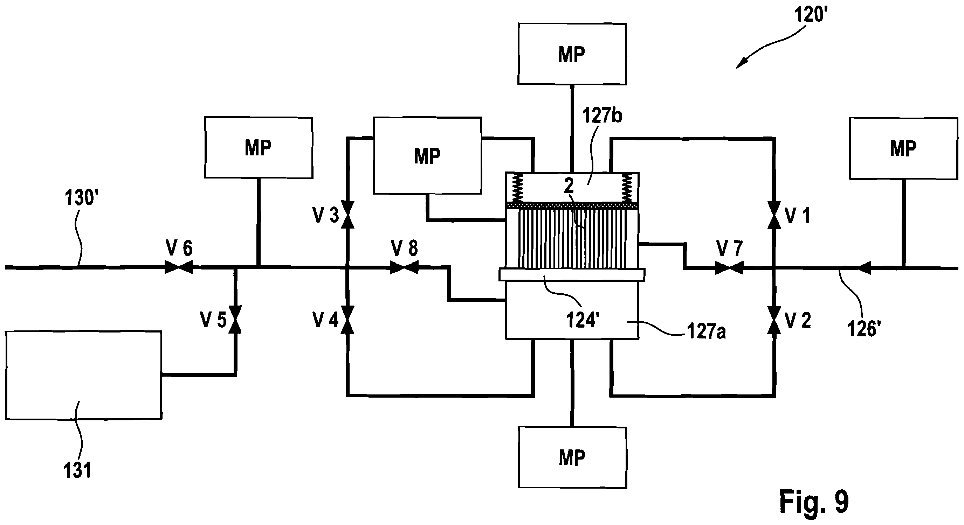

Das Expandieren der Polymer-Partikel mit Dampf kann auf unterschiedliche Weise durchgeführt werden. Fig. 9 stellt dabei ein schematisches Kreislaufsystem der Expansionseinrichtung 120' dar. Hierbei ist ein auf der Bereitstellungsauflage 124' positionierter Mauersteinrohling 2 dargestellt, der von einer Seitenwandstruktur der unteren Abdeckung 127a und der oberen Abdeckung 127b umschlossen ist. Beide Abdeckungen sowie die Seitenwandstruktur sind mit Druck- und Temperatursensoren ausgestattet.

Eine in dem Kreislaufsystem ausgebildete Dampfzufuhrleitung 126' ist an der Seitenwandstruktur der unteren Abdeckung 127a und der oberen Abdeckung 127b angeschlossen und weist ferner einen Druck- und Temperatursensor auf. Zusätzlich ist die Dampfzufuhrleitung 126' mit Ventilen V1, V2 und V7 versehen, die dabei derart steuerbar sind, dass der Dampf je nach Öffnen und Schließen der Ventile V1, V2 und V7 zur Seitenwandstruktur der unteren Abdeckung 127a und/oder der oberen Abdeckung 127b strömt, so dass eine individuelle Versorgung mit Dampf sichergestellt ist. Der Druck- und Temperatursensor der Zufuhrleitung 126' ist stromaufwärts der Ventile V1, V2 und V7 angeordnet.

Um den Dampf wieder abzuführen, weist das Kreislaufsystem eine an der Seitenwandstruktur der unteren Abdeckung 127a und der oberen Abdeckung 127b angeschlossene Abfuhrleitung 130' sowie einen Druck- und Temperatursensor auf. Zusätzlich ist die Abfuhrleitung 130' mit Ventilen V3, V4 und V8 versehen, die dabei derart steuerbar sind, dass der Dampf je nach Öffnen und Schließen der Ventile V3, V4 und V8 von der Seitenwandstruktur der unteren Abdeckung 127a und/oder der oberen Abdeckung 127b abführbar ist. Der Druck- und Temperatursensor ist dabei zwischen den Ventilen V3, V4, V8 und den Ventilen V5, V6 angeordnet. Das Ventil V6 ermöglicht das Öffnen und Schließen der Abfuhrleitung 130' gegenüber der Umgebung, wohingegen das Ventil V5 die Abfuhrleitung 130' gegenüber einer Vakuumeinheit 131 öffnet und schließt. Mit der Vakuumeinheit 131 ist es möglich, einen Unterdruck aufzubauen bzw. die in den Hochlöchern vorhandene Luft abzusaugen und so den Dampf wirksamer durch die Hochlöcher des Mauersteinrohlings 2 durchströmen zu lassen.

Mit dem Kreislaufsystem der Expansionseinrichtung 120' können verschiedene Takte gefahren werden. Wird das Ventil V1 geöffnet und das Ventil V2 bleibt geschlossen, strömt der Dampf nur in die obere Abdeckung 127b und die Mauersteinrohlinge 2 werden von oben mit Dampf beaufschlagt. Zum Abführen des Dampfes wird hierbei das Ventil V4 und V6 in der Abfuhrleitung 130' geöffnet, so dass der Dampf abtransportiert werden kann. Wird gewünscht, dass der Dampf nicht nur entweicht, sondern zusätzlich ein Unterdruck an der unteren Abdeckung 127a aufgebaut wird, wird das Ventil V5 geöffnet und das Ventil V6 geschlossen. Die Vakuumeinheit 131 erzeugt dabei einen Unterdruck, so dass der Dampf wirksam durch die Mauersteinrohlinge 2 gesaugt wird. Anschließend kann ein weiterer Takt durchgeführt werden, wobei in der Zufuhrleitung 126' das Ventil V2 geöffnet und das Ventil V1 geschlossen wird und bei der Abfuhrleitung 130' das Ventil V3 geöffnet und das Ventil V4 geschlossen wird. Zusätzlich wird bei der Abfuhrleitung 130' entweder noch das Ventil V5 oder das Ventil V6 geöffnet. Durch das Öffnen des Ventils V7 wird auf die Außenseiten der Mauersteinrohlinge 2 der Dampfdruck aufgebracht. Allerdings ist auch jede andere Kombination von Druckbeaufschlagung möglich.

Zur Steuerung des Systems sind an verschiedenen Stellen im Kreislaufsystem der Expansionseinrichtung 120' Messpunkte MP angeordnet, an welchen jeweils der Druck und die Temperatur erfasst werden.

Mittels der Dampfbeaufschlagung der Polymer-Partikel wird eine Expansion derselben in Gang gesetzt, welche schließlich zu einem "Verkleben" der Partikel untereinander sowie auch in gewissem Rahmen mit der benachbarten Wand des jeweiligen Hochlochs führt, so dass sich ein Formkörper im Hochloch des Mauersteins ausbildet. Dabei kommt kein Bindemittel zum Einsatz. Dies hat ferner den Vorteil, dass das Dämmmaterial quasi sortenrein vorliegt und besser wiederverwertbar ist. Zudem reduziert sich dadurch die Brandlast im Dämmkörper.

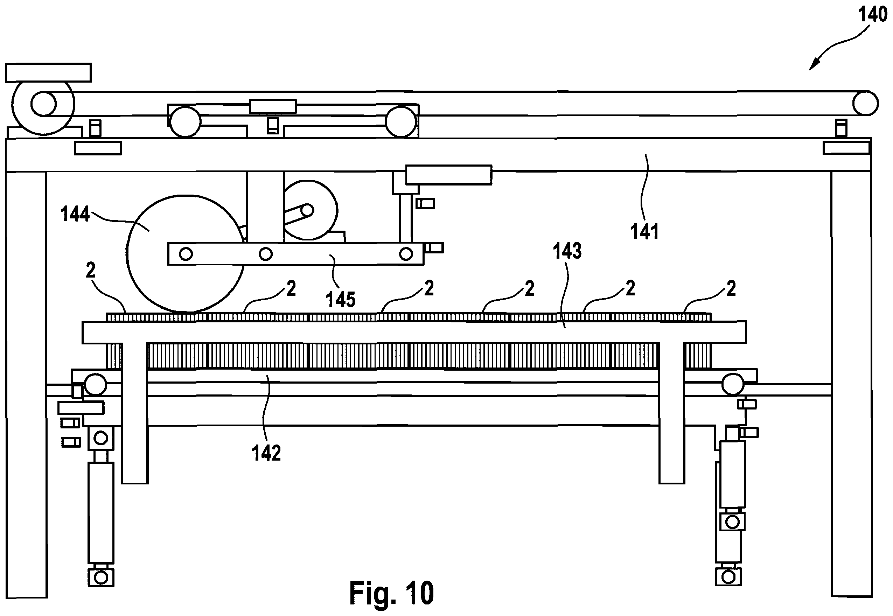

Fig. 10 zeigt eine Seitenansicht einer Schmelzeinrichtung 140, welche ebenfalls eine Trägerstruktur 141 aufweist. Die Mauersteinrohlinge 2 befinden sich auf einer Auflagestruktur 142 und sind von zwei gegenüberliegenden Einspannelementen 143 fixiert. Oberhalb der Auflagestruktur 142 ist eine höhenverstellbare Heizrolle 144 aus Metall an einer durch Elektromotoren mit einstellbarer Geschwindigkeit seitlich bewegbaren Befestigungsstruktur 145 befestigt, wodurch diese über die komplette Länge der aufgestellten Mauersteinrohlinge 2 bewegbar ist. Die Heizrolle 144 wird elektrisch derart auf eine Temperatur erwärmt, dass die Polymer-Partikel bis zur Höhe der Mauersteinrohlinge 2, d.h. zu deren Lagerfugenfläche, abgeschmolzen werden. Der Vorgang wird dabei über die eingestellte Temperatur und die Bewegungsgeschwindigkeit der Heizrolle 144 gesteuert. Neben einer elektrischen Erwärmung der Heizrolle 144, ist auch die Erwärmung mittels einer Gasverbrennung möglich.

Ist die erste Oberfläche der Mauersteinrohlinge 2 mit der Heizrolle 144 geglättet, übernimmt eine nicht dargestellte Wendeeinrichtung das Wenden der sechs hier hintereinander angeordneten, bereits befüllten Mauersteinrohlinge 2. Anschließend wird die Heizrolle 144 über die noch nicht geglättete Oberfläche der Mauersteinrohlinge 2 bewegt. Nach Verlassen der Schmelzeinrichtung 140 sind die dann fertigen Mauersteine 1 an beiden Oberflächen derart von den überschäumten Polymer-Partikeln abgeschmolzen, dass diese planeben sind.

Die vorliegende Erfindung lässt neben der erläuterten Ausführungsform weitere Gestaltungsansätze zu.

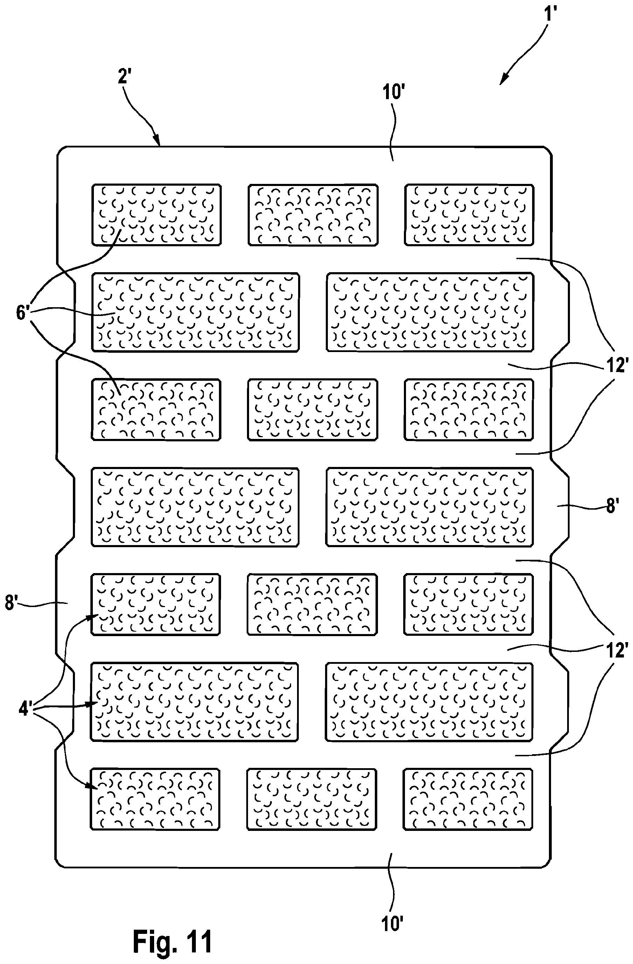

Wie erläutert zeigt Figur 6 eine schematische Schnittansicht eines Lochbildes des aus Figur 1 dargestellten Mauersteins 1. Die Anwendung des Verfahrens zur Herstellung eines Mauersteins 1 ist jedoch nicht auf das in Figur 6 dargestellte Lochbild beschränkt. Das in Figur 11 dargestellte Lochbild eines Mauersteins 1' mit rechteckigen Löchern stellt exemplarisch ein weiteres Lochbild dar. Dieser besteht aus einem Mauersteinrohling 2', der Hochlöcher 4' aufweist. Darin ist jeweils eine Dämmfüllung 6' angeordnet. Der Mauerstein 1' weist dabei in herkömmlicher Weise Stoßfugenstege 8', Außenstege 10' und Innenstege 12' auf. Je nach den Anforderungen, insbesondere Brandschutz, Schallschutz, Statik, etc., können aber ferner beliebige, die weiteren Anforderungen erfüllende Lochbilder, auch Mischlochbilder, gewählt werden.

Obgleich die Auflageoberfläche 124a gitterartig ausgebildet ist, kann sie auch aus einem Lochblech, einem Spaltsieb, etc. gebildet sein, durch das der Wasserdampf strömt.

Obschon bei der vorliegend diskutierten Ausführungsform Wasserdampf verwendet wird, ist es auch möglich, dass der Wasserdampf noch weitere Additive enthält. Diese Additive können die Verfestigung der Dämmfüllung 6 fördern, die Sicherheit gegenüber Brand erhöhen und/oder eine Verbesserung der Wärmdämmeigenschaften erreichen. Allerdings ist es erfindungsgemäß nicht vorgesehen, ein Bindemittel einzusetzen.

Alternativ ist es auch möglich, einen anderen Dampf anstelle von Wasserdampf zu verwenden.

Weiterhin ist denkbar, dass der Takt, der Dampfdruck sowie die Zeitspanne des aufzubringenden Drucks je nach Dämmstoff variiert werden können, so dass die einzelnen Polymer-Partikel jeweils am Effektivsten aufgeschäumt werden können. So kann die Beaufschlagung mit Dampf o. dgl. z.B. auch in mehreren Takten wie drei gegenläufige Takte erfolgen. Zudem kann der Dampfdruck durch Verdichtung des Dampfes o. dgl. und/oder auch durch Herstellung eines Vakuums auf der gegenüber liegenden Seite bereitgestellt werden.

Durch eine dickere Ausbildung der Stege, oder wenn die Stege des Mauersteins bereits an sich stabil genug sind, kann der auf die Außenseiten des Mauersteinrohlings beaufschlagte Dampfdruck auch ohne Druckausgleich zum Umfeld des Mauersteins kompensiert werden, so dass der Mauersteinrohling 2 nicht birst. Dann ist eine allseitige Kapselung des Mauersteins beim Expandieren verzichtbar. Der Mauersteinrohling bildet dann quasi in sich eine Druckkammer zur Durchführung des erfindungsgemäßen Verfahrens.

Hierzu ist es möglich, dass die Bereitstellungsauflage 124 bzw. 124', die Abdeckung 127, die untere Abdeckung 127a und/oder die obere Abdeckung 127b derart an einen Mauersteinrohling oder an mehrere in Reihe hintereinander positionierten Mauersteinrohlinge auf die jeweiligen Lochbilder aufgesetzt werden, dass der Dampf o. dgl. ohne auszutreten von der Bereitstellungsauflage 124 bzw. 124' zur Abdeckung 127 bzw. von der unteren Abdeckung 127a zur oberen Abdeckung 127b oder umgekehrt strömen kann. Die Außenseiten bzw. -stege des Mauersteinrohlings 2 bzw. der Mauersteinrohlinge 2 bilden somit eine dichte Außenkammer, durch die der Dampf o. dgl. entlang der Hochlöcher den Mauersteinrohling 2 durchströmt und die Polymer-Partikel expandiert.

Erfindungsgemäß wird Polystyrol als Polymer-Partikel verwendet.

Im Übrigen ist es auch nicht erforderlich, dass alle Hochlöcher eines Mauersteins in der erfindungsgemäßen Weise mit einer Dämmfüllung versehen werden. Eventuell nicht verfüllte Hochlöcher können leer bleiben oder einen anderen Werkstoff aufnehmen.

Zwar wird in der in Fig. 10 dargestellten Schmelzeinrichtung 140 lediglich eine Heizrolle 144 aus Metall verwendet; es ist jedoch durchaus möglich, die Schmelzeinrichtung so auszugestalten, dass sie zwei z.B. seitlich an liegenden Mauersteinen angreifende Heizrollen aufweist und somit auf eine Wendeeinrichtung verzichtet werden kann.

Im gezeigten Ausführungsbeispiel ist die Heizrolle 144 direkt beheizt; dies ist jedoch nicht erforderlich. Es kann auch eine indirekte Beheizung vorgesehen sein. Ferner kann auch die Beheizungsart anders als die erläuterte elektrische Beheizung sein, wie z.B. durch eine Gasflamme, Thermoöl, Heißluft, etc..

Anstelle der Heizrolle 144 kann zum Abtrag eines die Lagerfugenfläche des Mauersteinrohlings 2 überschäumenden Abschnitts des Dämmkörpers auch ein Schleifschritt, ein Bürsten oder dgl. vorgesehen sein.

Obgleich der Mauerstein 1 im Ausführungsbeispiel als Hochlochziegel ausgebildet ist, kann auch ein Langlochziegel, Betonstein, Porenbetonstein, Bimsstein, Kalksandstein, etc. als Rohling verwendet werden. Ferner ist es möglich, Mauersteine mit jeder Art von Lochbild zu verwenden.

## Patentansprüche

1. Verfahren zur Herstellung eines Mauersteins (1; 1') mit einer Dämmfüllung (6; 6'), welche in Hochlöchern (4, 4v) des Mauersteins (1; 1') angeordnet ist, mit den Schritten:
Bereitstellen eines Mauersteinrohlings (2; 2'),
Einbringen von expandierbaren Polystyrol-Partikeln in wenigstens einige der Hochlöcher (4; 4') des Mauersteinrohlings (2; 2'),
Expandieren der Polystyrol-Partikel mittels Dampf, so dass diese sich ausdehnen und sich in dem jeweiligen Hochloch (4; 4') zur Herstellung eines Dämmkörpers miteinander verbinden,
wobei vorexpandierte Polystyrol-Partikel (5) in die wenigstens einigen der Hochlöcher (4; 4') des Mauersteinrohlings (2; 2') eingebracht werden,
**dadurch gekennzeichnet,**
**dass** die vorexpandierten Polystyrol-Partikel (5) in den Hochlöcher (4; 4') zwischen 10 und 90 Sekunden abwechselnd von beiden Seiten mit Dampf mit einem Druck im Bereich zwischen 0,1 und 3,5 bar beaufschlagt werden, so dass die Polystyrol-Partikel bis zu dem Grad expandiert werden, an dem die Dämmkörper eine Dichte im Bereich zwischen 10 kg/m³ und 30 kg/m³ aufweisen, wobei der Expansionsschritt bis zu dem Grad geführt wird, an dem weniger als 20 Vol.-% an Resttreibgas in den expandierten Polystyrol-Partikeln vorhanden ist.

2. Verfahren nach Anspruch 1, **dadurch gekennzeichnet, dass** der Schritt des Einbringens von expandierbaren Polystyrol-Partikeln in wenigstens einige der Hochlöcher (4; 4') des Mauersteinrohlings (2; 2') mittels Schieben, Rütteln und/oder Saugen durchgeführt wird.

3. Verfahren nach Anspruch 1 oder 2, **dadurch gekennzeichnet, dass** die Polystyrol - Partikel bis zu dem Grad expandiert werden, an dem die Dämmkörper eine Dichte im Bereich zwischen 15 kg/m³ und 30 kg/m³, vorzugsweise zwischen 17 kg/m³ und 23 kg/m³, und insbesondere eine Dichte von etwa 20 kg/m³ aufweisen.

4. Verfahren nach einem der Ansprüche 1 bis 3, **dadurch gekennzeichnet, dass** der Expansionsschritt bis zu dem Grad geführt wird, an dem weniger als 10 Vol.-%, und insbesondere weniger als 5 Vol.-%, an Resttreibgas in den expandierbaren Polystyrol-Partikeln vorhanden ist.

5. Verfahren nach einem der Ansprüche 1 bis 4, **dadurch gekennzeichnet, dass** zwischen 20 und 70 Sekunden, und insbesondere zwischen 40 und 50 Sekunden, mit Dampfbeaufschlagt werden.

6. Verfahren nach einem der Ansprüche 1 bis 5, **dadurch gekennzeichnet, dass** der Dampf mit einem Druck im Bereich zwischen 1,0 und 1,7 bar, und insbesondere zwischen 1,4 und 1,6 bar, eingebracht wird.

7. Verfahren nach einem der Ansprüche 1 bis 6, **dadurch gekennzeichnet, dass** die Polystyrol-Partikel in den Hochlöchern (4; 4') des Mauersteinrohlings (2; 2') eingeschlossen werden.

8. Verfahren nach einem der Ansprüche 1 bis 7, **dadurch gekennzeichnet, dass** der Mauerstein (1; 1') vor dem Expansionsschritt derart umschlossen wird, dass der nachfolgend durch den Dampf o. dgl. aufgebrachte Druck auch auf die Außenseiten des Mauersteins (1; 1') einwirkt.

9. Verfahren nach einem der Ansprüche 1 bis 8, **gekennzeichnet durch** den Schritt des Abschmelzens überschäumter Polystyrol-Partikel, so dass die Dämmfüllung (6, 6') mit einer Höhe des Mauersteinrohlings (2, 2') fluchtet.

## Claims

1. Method for producing a brick (1; 1') having an insulating filling (6; 6') that is arranged in vertical cavities (4, 4v) of the brick (1; 1'), said method having the following steps:
preparing a brick blank (2; 2'),
introducing expandable polystyrene particles into at least some of the vertical cavities (4; 4') of the brick blank (2; 2'),
expanding the polystyrene particles by means of steam, such that they expand and fuse together to produce an insulating body in the vertical cavity (4; 4') concerned,
wherein pre-expanded polystyrene particles (5) are introduced into the at least some of the vertical cavities (4; 4') of the brick blank (2; 2),
**characterised in that**
the pre-expanded polystyrene particles (5) in the vertical cavities (4; 4') are alternately subjected from both sides for periods of 10 to 90 seconds to steam pressurised between 0.1 and 3.5 bar, such that the polystyrene particles are expanded to such a degree that the density of the insulating bodies is in the range of 10 kg/m³ to 30 kg/m³, wherein the expansion step is conducted until less than 20 vol. % of residual propellant remains in the expanded polystyrene particles.

2. Method according to claim 1, **characterised in that** the step to introduce the polystyrene particles into at least some of the vertical cavities (4; 4') of the brick blank (2; 2') is carried out by pushing, shaking and/or suction.

3. Method according to claim 1 or 2, **characterised in that** the polystyrene particles are expanded to such a degree that the density of the insulating bodies ranges between 15 kg/m³ and 30 kg/m³, preferably between 17 kg/m³ and 23 kg/m³, and in particular about 20 kg/m³.

4. Method according to one of claims 1 to 3, **characterised in that** the expansion step is conducted to a degree, in which the content of residual propellant in the expandable polystyrene particles is less than 10 vol. % and in particular less than 5 vol. %.

5. Method according to one of claims 1 to 4, **characterised in that** the steam pressurisation lasts between 20 and 70 seconds, and in particular between 40 and 50 seconds.

6. Method according to one of claims 1 to 5, **characterised in that** the steam is introduced under a pressure in the range between 1.0 and 1.7 bar, and in particular between 1.4 and 1.6 bar.

7. Method according to one of claims 1 to 6, **characterised in that** the polystyrene particles are encased in the vertical cavities (4; 4') of the brick blank (2; 2').

8. Method according to one of claims 1 to 7, **characterised in that** the brick (1; 1') prior to the expansion step is enclosed in such a way that the subsequently applied pressure from the steam or the like also acts on the external sides of the brick (1; 1').

9. Method according to one of claims 1 to 8, **characterised by** the fusion step of the foamed polystyrene particles, such that the insulating filling (6; 6') is flush with one level of the brick blank (2; 2').

## Revendications

1. Procédé de fabrication d'une brique (1 ; 1') munie d'un remplissage isolant (6 ; 6') agencé dans des perforations verticales (4, 4v) de la brique (1 ; 1'), comprenant les étapes consistant à :
fournir une ébauche de brique (2 ; 2'),
introduire des particules de polystyrène expansibles dans au moins certaines des perforations verticales (4 ; 4') de l'ébauche de brique (2 ; 2'),
expanser des particules de polystyrène au moyen de vapeur de sorte qu'elles se dilatent et se lient entre elles au sein de la perforation verticale (4 ; 4') respective pour produire un corps isolant,
dans lequel des particules de polystyrène pré-expansées (5) sont introduites dans au moins certaines des perforations verticales (4 ; 4') de l'ébauche de brique (2 ; 2'),
**caractérisé en ce que**
les particules de polystyrène pré-expansées (5) présentes dans les perforations verticales (4 ; 4') sont soumises alternativement des deux côtés à de la vapeur présentant une pression dans la plage comprise entre 0,1 et 3,5 bars pendant 10 à 90 secondes, de sorte que les particules de polystyrène sont expansées jusqu'à ce que les corps isolants présentent une masse volumique dans la plage comprise entre 10 kg/m³ et 30 kg/m³, dans lequel l'étape d'expansion est mise en oeuvre jusqu'à ce qu'il se trouve moins de 20 % en volume de gaz d'expansion résiduel dans les particules de polystyrène expansées.

2. Procédé selon la revendication 1, **caractérisé en ce que** l'étape consistant à introduire des particules de polystyrène expansibles dans au moins certaines des perforations verticales (4 ; 4') de l'ébauche de brique (2 ; 2') est mise en oeuvre par poussée, secouage et/ou aspiration.

3. Procédé selon la revendication 1 ou 2, **caractérisé en ce que** les particules de polystyrène sont expansées jusqu'à ce que les corps isolants présentent une masse volumique dans la plage comprise entre 15 kg/m³ et 30 kg/m³, de préférence comprise entre 17 kg/m³ et 23 kg/m³, et en particulier une masse volumique d'environ 20 kg/m³.

4. Procédé selon l'une quelconque des revendications 1 à 3, **caractérisé en ce que** l'étape d'expansion est mise en oeuvre jusqu'à ce qu'il se trouve moins de 10 % en volume, et en particulier moins de 5 % en volume, de gaz d'expansion résiduel dans les particules de polystyrène expansibles.

5. Procédé selon l'une quelconque des revendications 1 à 4, **caractérisé en ce qu'**une alimentation de vapeur a lieu pendant 20 à 70 secondes, et en particulier pendant 40 à 50 secondes.

6. Procédé selon l'une quelconque des revendications 1 à 5, **caractérisé en ce que** la vapeur est introduite avec une pression dans la plage comprise entre 1,0 et 1,7 bar, et en particulier comprise entre 1,4 et 1,6 bar.

7. Procédé selon l'une quelconque des revendications 1 à 6, **caractérisé en ce que** les particules de polystyrène sont enfermées dans les perforations verticales (4 ; 4') de l'ébauche de brique (2 ; 2').

8. Procédé selon l'une quelconque des revendications 1 à 7, **caractérisé en ce que** la brique (1 ; 1') est confinée avant l'étape d'expansion de telle manière que la pression appliquée ultérieurement grâce à la vapeur ou similaire agit également sur les faces extérieures de la brique (1 ; 1').

9. Procédé selon l'une quelconque des revendications 1 à 8, **caractérisé par** l'étape consistant à faire fondre des particules de polystyrène débordantes de sorte que le remplissage isolant (6 ; 6') est aligné avec une hauteur de l'ébauche de brique (2 ; 2').
